# EUROPEAN PATENT APPLICATION

(11) **EP 4 195 784 A1**
(43) Date of publication of application: **14.06.2023**
(21) Application number: 20948188.6
(22) Date of filing: 07.08.2020
(51) Int. Cl.: H04W 52/02, H04W 68/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN)
(74) Representative: Novagraaf Technologies
(86) International application number: PCT/CN2020/108000
(87) International publication number: WO 2022/027680

(57) **Abstract**

Provided are a wireless communication method and device. Said method comprises: receiving a first message on the basis of a first discontinuous reception (DRX) configuration corresponding to the first message. The first message is received by means of the DRX configuration corresponding to the first message, so that DRX and D2D communication can be combined, thereby being able to reduce power consumption. Especially for special types of messages, such as messages that need to be sent before the establishment of a connection between terminals, it can not only ensure the normal transmission of data, but also reduce power consumption.

## Description

### TECHNICAL FIELD

Embodiments of this application relate to the field of communication, and more particularly, to wireless communication methods and devices.

### BACKGROUND

Device-to-device communication relates to sidelink (SL) transmission based on the device to device (D2D) technology, and is different from the traditional cellular system in which communication data is received or sent via base stations. D2D may include scenarios such as proximity based service (ProSe), vehicle to everything (V2X), and wearable devices (FeD2D). For example, V2X communication, also called Internet of vehicles communication, adopts the manner of direct D2D communication, thereby achieving higher spectral efficiency and lower transmission delay.

However, for D2D communication, the discontinuous reception (DRX) mechanism have been not considered, which means that the terminal device is always in the state of continuous reception, resulting in excessive power consumption of the terminal device.

### SUMMARY

Wireless communication methods and devices are provided, which can combine DRX with D2D communication, thereby reducing power consumption.

According to a first aspect, a wireless communication method is provided, including:
receiving a first message based on a first DRX configuration corresponding to the first message.

According to a second aspect, a wireless communication method is provided, including:
sending a first message based on a first DRX configuration corresponding to the first message.

According to a third aspect, a wireless communication method is provided, including:
receiving or sending indication information, wherein the indication information is used for indicating that a first message is not included or is included in to-be-transmitted data.

According to a fourth aspect, a terminal device is provided for performing the method according to the first aspect or any implementation manner thereof. Specifically, the terminal device includes a functional module for performing the method according to the first aspect or any implementation manner thereof.

According to a fifth aspect, a terminal device is provided for performing the method according to the second aspect or any implementation manner thereof. Specifically, the terminal device includes a functional module for performing the method according to the second aspect or any implementation manner thereof.

According to a sixth aspect, a terminal device is provided for performing the method according to the third aspect or any implementation manner thereof. Specifically, the terminal device includes a functional module for performing the method according to the third aspect or any implementation manner thereof.

According to a seventh aspect, a terminal device is provided, including a processor and a memory. The memory is used for storing a computer program, and the processor is used for invoking and running the computer program stored in the memory, so as to perform the method according to the first aspect or any implementation manner thereof.

According to an eighth aspect, a terminal device is provided, including a processor and a memory. The memory is used for storing a computer program, and the processor is used for invoking and running the computer program stored in the memory, so as to perform the method according to the second aspect or any implementation manner thereof.

According to a ninth aspect, a terminal device is provided, including a processor and a memory. The memory is used for storing a computer program, and the processor is used for invoking and running the computer program stored in the memory, so as to perform the method according to the third aspect or any implementation manner thereof.

According to a tenth aspect, a chip is provided for implementing the method according to any one of the first to third aspects or any implementation manner thereof. Specifically, the chip includes a processor used for invoking and running a computer program from a memory, causing a device installed with the chip to perform the method according to any one of the first to third aspects or any implementation manner thereof.

According to an eleventh aspect, a computer-readable storage medium is provided for storing a computer program, where the computer program causes a computer to perform the method according to any one of the first to third aspects or any implementation manner thereof.

According to a twelfth aspect, a computer program product is provided, including computer program instructions that cause a computer to perform the method according to any one of the first to third aspects or any implementation manner thereof.

According to a thirteenth aspect, a computer program is provided which, when running on a computer, causes the computer to perform the method according to any one of the first to third aspects or any implementation manner thereof.

Based on the above technical solutions, by receiving the first message based on the DRX configuration corresponding to the first message, DRX and D2D communication can be combined, thereby reducing power consumption, especially for special types of messages, such as messages that need to be sent before the connection is established between terminals. Not only the normal transmission of data can be ensured, but also power consumption can be reduced.

### BRIEF DESCRIPTION OF THE DRAWINGS

FIG. 1 and FIG. 2 illustrate examples of application scenarios according to some embodiments of this application.
FIG. 3 to FIG. 5 are schematic flowcharts of wireless communication methods according to some of this application.
FIG. 6 is a schematic block diagram of a terminal device according to some embodiments of this application.
FIG. 7 is a schematic block diagram of a communication device according to some embodiments of this application.
FIG. 8 is a schematic block diagram of a chip according to some embodiments of this application.

### DETAILED DESCRIPTION

The technical solutions according to some embodiments of this application will be described below with reference to the accompanying drawings.

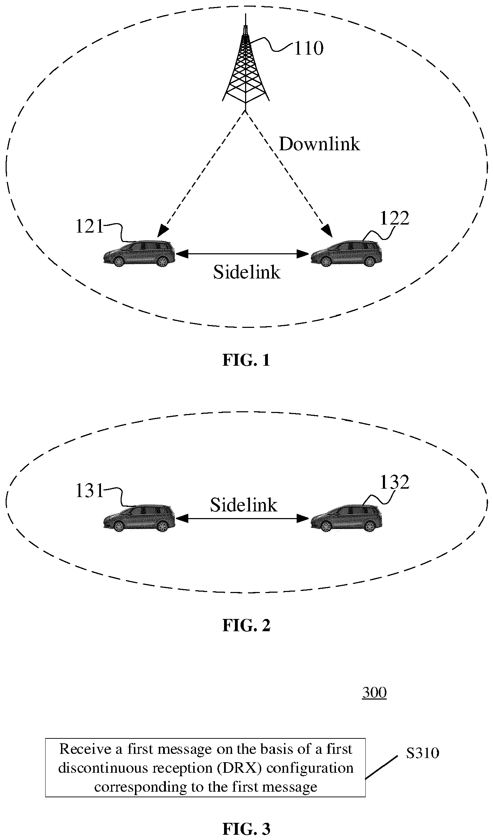

The system framework from the in-vehicle terminal to the in-vehicle terminal is shown in FIG. 1 or FIG. 2.

As shown in FIG. 1, transmission resources of the terminal device 121 and the terminal device 122 are allocated by the network device 110, and the terminal device 121 and the terminal device 122 send data on the side link according to the resources allocated by the network device 110. The network device 110 may allocate resources of a single transmission for the terminal device 121 and the terminal device 122, and may also allocate resources of a semi-static transmission for the terminal device 121 and the terminal device 122.

As shown in FIG. 2, the in-vehicle terminal 131 and the in-vehicle terminal 132 may select a resource from a resource pool for data transmission.

It should be understood that the terminal device involved in some embodiments of this application may be any device or apparatus configured with a physical layer and a medium access control layer, and the terminal device may also be referred to as an access terminal, for example, user equipment (UE), subscriber unit, subscriber station, mobile station, mobile site, remote station, remote terminal, mobile device, user terminal, terminal, wireless communication device, user agent or user device. The access terminal may be a cellular phone, a cordless phone, a session initiation protocol (SIP) phone, a wireless local loop (WLL) station, a personal digital assistant (PDA), a wireless communication-enabled handheld device, a computing device or another linear processing device, in-vehicle device, or wearable device connected to a wireless modem, or the like.

It should be noted that some embodiments of this application may be applicable to any communication framework from a terminal device to a terminal device, for example, vehicle to vehicle (V2V), vehicle to everything (V2X), device to device (D2D), and the like.

Taking the D2D as an example, the D2D may include scenarios such as proximity based service (ProSe), vehicle to Eeverything (V2X), and wearable device (FeD2D). The main services of the ProSe scenario may include public safety services. The V2X scenario may be a vehicle-to-vehicle communication scenario, and the main services it faces may include vehicle-to-vehicle and vehicle-to-person communication services with a relatively high moving speed. The FeD2D scenario may be a scenario in which a wearable device accesses a network through a mobile phone, and its main services may include services in a scenario of low moving speed and low power access.

In some embodiments of this application, the above-mentioned terminal devices may receive or send data based on the discontinuous reception (DRX) mechanism, or may be in a state of continuous data reception.

For example, in the ProSe scenario, the DRX configuration may be pre-configured or configured by the network device. Based on a timing reference signal propagated by the network device or the terminal device, only the same DRX configuration is configured between the terminal devices communicating with each other. In other words, based on the same DRX configuration as pre-configured or network-configured, the understanding of the DRX configuration is the same between the terminal devices, so the data transmission and reception can be thus achieved between the terminal devices.

For another example, in the V2X scenario, since the automotive terminal has a fixed power input, the DRX configuration may be ignored for data transmission after the connection is established. In other words, it is assumed that the automotive terminal is always in the state of continuous reception. Although the handheld terminal does not have the fixed power supply, since DRX does not comply with the low-latency requirements of the V2X, the DRX configuration may not be considered for data transmission after the connection is established.

For another example, in the FeD2D scenario, for the DRX mode used in the communication between the wearable device and the mobile phone, the network device configures the DRX configuration for the remote terminal through the relay terminal. After receiving the DRX configuration configured by the network device, the remote terminal communicates with the relay terminal by using the DRX configuration.

FIG. 3 shows a schematic flowchart of a wireless communication method 300 according to some embodiments of this application, and the method 300 may be executed by a terminal device, for example, the terminal device shown in FIG. 1 or the in-vehicle terminal shown in FIG. 2.

As shown in FIG. 3, the method 300 may include followings.

In S310, a first message is received based on a first DRX configuration corresponding to the first message.

By receiving the first message through the DRX configuration corresponding to the first message, DRX and D2D communication can be combined, thereby reducing power consumption, especially for special types of messages, such as messages that need to be sent before the connection is established between terminals. Not only the normal transmission of data can be ensured, but also power consumption can be reduced.

For example, messages that need to be sent before the establishment of connection may be received based on DRX. In addition, messages that need to be sent after the connection is established may also be received based on the DRX configuration configured by the network device, or the DRX configuration configured by the network device through the relay terminal.

In other words, the first message may be a message that needs to be received before establishing a connection between terminal devices.

In some embodiments of this application, the first message includes at least one of the following messages: a system message, a paging message, and a device discovery message.

For example, the terminal device may receive the system message based on the DRX configuration corresponding to the system message.

In some embodiments of this application, the first DRX configuration is a dedicated configuration of the first message. In other words, the first DRX configuration is only used for receiving the first message.

In some embodiments of this application, the first message corresponds to a first identifier, and the first identifier corresponds to the first DRX configuration.

In other words, the first message may need to correspond to the first DRX configuration through the first identifier.

In some embodiments of this application, the first identifier includes at least one of the following: a terminal identifier, a terminal group identifier, a message type identifier, a transmission identifier, and an application identifier.

For example, it is assumed that the first identifier is the terminal identifier. The terminal device may determine a message corresponding to the terminal identifier as the first message, and determine a DRX configuration corresponding to the terminal identifier as the first DRX configuration. Further, the terminal device may receive the first message based on the first DRX configuration.

In some embodiments of this application, the first identifier is a layer-2 address.

For example, the layer-2 address may be a media access control (MAC) address of the terminal device.

In some embodiments of this application, the method 300 may include:
determine a time resource corresponding to the first DRX configuration based on at least one synchronization source.

In some embodiments of this application, the at least one synchronization source includes a synchronization source of the terminal device.

For example, the at least one synchronization source may include a global positioning system (GPS), an access network device, a terminal device, and the like.

In some embodiments of this application, the at least one synchronization source includes a synchronization source corresponding to at least one synchronization signal that can be received.

In some embodiments of this application, the method 300 may include:
receive indication information, where the indication information is used for indicating that the first message is not included or is included in to-be-transmitted data.

For example, the terminal device may determine, based on the received indication information, whether there is a physical sidelink control channel (PSCCH) and/or physical sidelink shared channel (PSSCH) related to the first message during the activation period corresponding to the DRX configuration.

In some embodiments of this application, the method 300 may include:
receive the first message if the indication information indicates that the to-be-transmitted data includes the first message.

In other embodiments, if the indication information indicates that the to-be-transmitted data does not include the first message, the first message is not received.

Through the indication information, the terminal device can be prevented from receiving useless messages, and accordingly, the power consumption of the terminal device can be further reduced.

In some embodiments of this application, the indication information is carried in at least one field in sideline control information (SCI), and/or the indication information indicates, through a format of the SCI, that the first message is not included or is included in the to-be-transmitted data.

In some embodiments of this application, the indication information is carried in at least one field in a media access control (MAC) header, and/or the indication information indicates, through a format of the MAC header, that the first message is not included or is included in the to-be-transmitted data.

For example, the indication information may be carried in at least one field in a header of a MAC protocol data unit (PDU). For another example, the indication information may be carried in at least one field in a header of a MAC sub-PDU. In other words, the indication information may be carried in at least one field in the primary header of the MAC PDU, and may also be carried in at least one field in the sub-header of the MAC PDU.

For another example, the indication information indicates, through a first format of the SCI, that the to-be-transmitted data does not include the first message, and the indication information indicates, through a second format of the SCI, that the to-be-transmitted data includes the first message, where the first format is different from the second format.

In some embodiments of this application, the method 300 may be applied to device-to-device (D2D) communication.

For example, the method 300 may be applied to scenarios such as ProSe, V2X, and FeD2D.

Some embodiments of this application have been described in detail above with reference to the accompanying drawings. However, this application is not limited to the specific details of the above-mentioned embodiments. Within the scope of the technical concept of this application, various simple modifications can be made to the technical solutions of this application, and shall fall within the protection scope of this application. For example, the various specific technical features described in the above-mentioned specific embodiments can be combined in any suitable manner under the condition of no contradiction. In order to avoid unnecessary repetition, various possible combinations will not be described in this application. For another example, the various embodiments of this application can also be combined arbitrarily, as long as they do not violate the idea of this application, and they should also be regarded as the content disclosed in this application.

It should also be understood that, in the various method embodiments of this application, the size of the sequence numbers of the above-mentioned processes does not mean the sequence of execution, and the execution sequence of each process should be determined by its function and internal logic, and should constitute no limitation on the implementation of the embodiments in this application. In addition, in some embodiments of this application, the term "and/or" is only used for describing an association relationship between associated objects, indicating that there may be three kinds of relationships. For example, A and/or B may represent three situations: A exists alone, both A and B exist, and B exists alone. In addition, the character "/" in this disclosure generally indicates that the related objects are in an "or" relationship.

The method according to some embodiments of this application is described in detail above with reference to FIG. 2 from the perspective of the receiving end. The following describes the method according to some embodiments of this application from the perspective of the transmitting end with reference to FIG. 3.

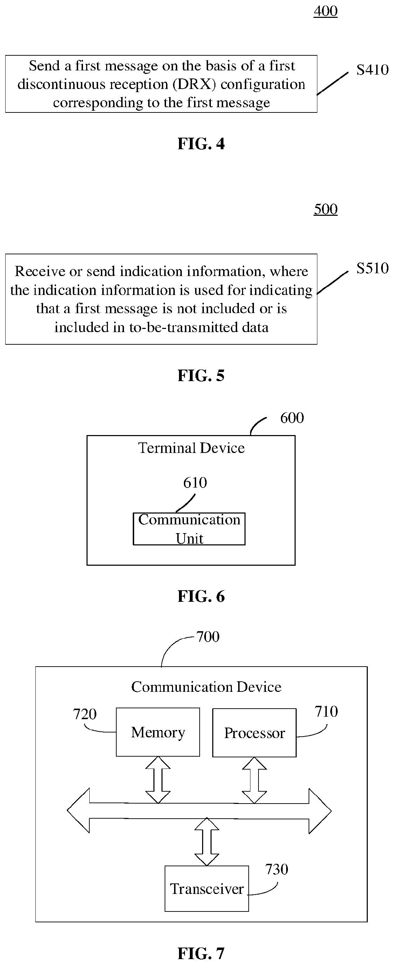

FIG. 4 shows a schematic flowchart of a wireless communication method 400 according to some embodiments of this application. The method 400 may be performed by a terminal device, for example, the terminal device shown in FIG. 1 or the in-vehicle terminal shown in FIG. 2.

As shown in FIG. 4, the method 400 may include followings.

In S410, a first message is sent based on a first DRX configuration corresponding to the first message.

In some embodiments of this application, the first message includes at least one of the following messages: a system message, a paging message, and a device discovery message.

In some embodiments of this application, the first DRX configuration is a dedicated configuration of the first message.

In some embodiments of this application, the first message corresponds to a first identifier, and the first identifier corresponds to the first DRX configuration.

In some embodiments of this application, the first identifier includes at least one of the following: a terminal identifier, a terminal group identifier, a message type identifier, a transmission identifier, and an application identifier.

In some embodiments of this application, the first identifier is a layer-2 address.

In some embodiments of this application, the method 400 may further include:
determining a time resource corresponding to the first DRX configuration based on at least one synchronization source.

In some embodiments of this application, the at least one synchronization source includes a synchronization source of a terminal device.

In some embodiments of this application, the at least one synchronization source includes a synchronization source corresponding to at least one synchronization signal that can be received.

In some embodiments of this application, the method 400 may further include:
sending indication information, where the indication information is used for indicating that the first message is not included or is included in to-be-transmitted data.

In some embodiments of this application, the method 400 may further include:
sending the first message if the indication information indicates that the first message is included in the to-be-transmitted data.

In some embodiments of this application, the indication information is carried in at least one field in SCI, and/or the indication information indicates, through a format of the SCI, that the first message is not included or is included in the to-be-transmitted data.

In some embodiments of this application, the indication information is carried in at least one field in a MAC header, and/or the indication information indicates, through a format of the MAC header, that the first message is not included or is included in the to-be-transmitted data.

In some embodiments of this application, the method is applied to D2D communication.

It should be understood that the steps in the method 400 may refer to the corresponding steps in the above-mentioned method 300, which are not repeated here for brevity.

FIG. 5 is a schematic flowchart of another wireless communication method 500 according to some embodiments of this application. The method 500 may be performed by a terminal device, for example, the terminal device shown in FIG. 1 or the in-vehicle terminal shown in FIG. 2.

As shown in FIG. 5, the method 500 may include followings.

In S510, indication information is received or sent, where the indication information is used for indicating that a first message is not included or is included in to-be-transmitted data.

In some embodiments of this application, the method further includes:
receiving or sending the first message if the indication information indicates that the first message is included in the to-be-transmitted data.

In some embodiments of this application, the indication information is carried in at least one field in sideline control information (SCI), and/or the indication information indicates, through a format of the SCI, that the first message is not included or is included in the to-be-transmitted data.

In some embodiments of this application, the indication information is carried in at least one field in a media access control (MAC) header, and/or the indication information indicates, through a format of the MAC header, that the first message is not included or is included in the to-be-transmitted data.

In some embodiments of this application, the first message includes at least one of the following messages: a system message, a paging message, and a device discovery message.

In some embodiments of this application, the method is applied in device-to-device (D2D) communication.

It should be understood that, for the steps in the method 500, reference may be made to the corresponding steps in the above-mentioned method 300 or the method 400, which are not repeated here for brevity.

The method embodiments of this application are described in detail above with reference to FIG. 1 to FIG. 5, and the apparatus embodiments of this application are described in detail below with reference to FIG. 6 to FIG. 8.

FIG. 6 is a schematic block diagram of a terminal device 600 according to some embodiments of this application.

In some embodiments of this application, the terminal device 600 may be configured to perform the above method 300.

For example, as shown in FIG. 6, the terminal device 600 may include:
a communication unit 610, configured to receive a first message based on a first DRX configuration corresponding to the first message.

In some embodiments of this application, the first message includes at least one of the following messages: a system message, a paging message, and a device discovery message.

In some embodiments of this application, the first DRX configuration is a dedicated configuration of the first message.

In some embodiments of this application, the first message corresponds to a first identifier, and the first identifier corresponds to the first DRX configuration.

In some embodiments of this application, the first identifier includes at least one of the following: a terminal identifier, a terminal group identifier, a message type identifier, a transmission identifier, and an application identifier.

In some embodiments of this application, the first identifier is a layer-2 address.

In some embodiments of this application, the communication unit 610 is further configured to:
determine a time resource corresponding to the first DRX configuration based on at least one synchronization source.

In some embodiments of this application, the at least one synchronization source includes a synchronization source of a terminal device.

In some embodiments of this application, the at least one synchronization source includes a synchronization source corresponding to at least one synchronization signal that can be received.

In some embodiments of this application, the communication unit 610 is further configured to:
receive indication information, where the indication information is used for indicating that the first message is not included or is included in to-be-transmitted data.

In some embodiments of this application, the communication unit 610 is further configured to:
receive the first message if the indication information indicates that the first message is included in the to-be-transmitted data.

In some embodiments of this application, the indication information is carried in at least one field in sideline control information (SCI), and/or the indication information indicates, through a format of the SCI, that the first message is not included or is included in the to-be-transmitted data.

In some embodiments of this application, the indication information is carried in at least one field in a media access control (MAC) header, and/or the indication information indicates, through a format of the MAC header, that the first message is not included or is included in the to-be-transmitted data.

In some embodiments of this application, the terminal device is applied in device-to-device (D2D) communication.

In some embodiments of this application, the terminal device 600 may be configured to perform the above method 400.

For example, as shown in FIG. 6, the terminal device 600 may include:
a communication unit 610, configured to receive a first message based on a first DRX configuration corresponding to the first message.

In some embodiments of this application, the first message includes at least one of the following messages: a system message, a paging message, and a device discovery message.

In some embodiments of this application, the first DRX configuration is a dedicated configuration of the first message.

In some embodiments of this application, the first message corresponds to a first identifier, and the first identifier corresponds to the first DRX configuration.

In some embodiments of this application, the first identifier includes at least one of the following: a terminal identifier, a terminal group identifier, a message type identifier, a transmission identifier, and an application identifier.

In some embodiments of this application, the first identifier is a layer-2 address.

In some embodiments of this application, the communication unit 610 is further configured to:
determine a time resource corresponding to the first DRX configuration based on at least one synchronization source.

In some embodiments of this application, the at least one synchronization source includes a synchronization source of a terminal device.

In some embodiments of this application, the at least one synchronization source includes a synchronization source corresponding to at least one synchronization signal that can be received.

In some embodiments of this application, the communication unit 610 is further configured to:
send indication information, where the indication information is used for indicating that the first message is not included or is included in to-be-transmitted data.

In some embodiments of this application, the communication unit 610 is further configured to:
send the first message if the indication information indicates that the first message is included in the to-be-transmitted data.

In some embodiments of this application, the indication information is carried in at least one field in sideline control information (SCI), and/or the indication information indicates, through a format of the SCI, that the first message is not included or is included in the to-be-transmitted data.

In some embodiments of this application, the indication information is carried in at least one field in a media access control (MAC) header, and/or the indication information indicates, through a format of the MAC header, that the first message is not included or is included in the to-be-transmitted data.

In some embodiments of this application, the terminal device is applied in device-to-device (D2D) communication.

In some embodiments of this application, the terminal device 600 may be configured to perform the above method 500.

For example, as shown in FIG. 6, the terminal device 600 may include:
a communication unit 610, configured to receive or send indication information, where the indication information is used for indicating that a first message is not included or is included in to-be-transmitted data.

In some embodiments of this application, the communication unit 610 is further configured to:
receive or send the first message if the indication information indicates that the first message is included in the to-be-transmitted data.

In some embodiments of this application, the indication information is carried in at least one field in sideline control information (SCI), and/or the indication information indicates, through a format of the SCI, that the first message is not included or is included in the to-be-transmitted data.

In some embodiments of this application, the indication information is carried in at least one field in a media access control (MAC) header, and/or the indication information indicates, through a format of the MAC header, that the first message is not included or is included in the to-be-transmitted data.

In some embodiments of this application, the first message includes at least one of the following messages: a system message, a paging message, and a device discovery message.

In some embodiments of this application, the terminal device is applied in device-to-device (D2D) communication.

It should be understood that the apparatus embodiments and the method embodiments may correspond to each other, and similar descriptions may refer to the method embodiments. Specifically, the terminal device 600 shown in FIG. 6 may correspond to the corresponding executor for performing the method 300, 400 or 500 according to the embodiments of this application, and the aforementioned and other operations and/or functions of each unit in the terminal device 600 are for the purpose of performing the corresponding processes in each method, and are not repeated here for the sake of brevity.

The communication device according to some embodiments of this application is described above from the perspective of functional modules with reference to the accompanying drawings. It should be understood that the functional modules can be implemented in the form of hardware, can also be implemented by instructions in the form of software, and can also be implemented by a combination of hardware and software modules.

Specifically, the steps of the method according to some embodiments of this application may be completed by hardware integrated logic circuits in the processor and/or instructions in the form of software, and the steps of the methods disclosed in conjunction with the embodiments of this application may be directly embodied as execution of a hardware decoding processor, or as execution of a combination of hardware and software modules in the decoding processor.

Optionally, the software modules may be located in random access memory, flash memory, read-only memory, programmable read-only memory, electrically erasable programmable memory, registers, and other storage medium known in the art. The storage medium is located in the memory, and the processor reads the information from the memory, and completes the steps in the above method embodiments in combination with its hardware.

For example, the processing unit and the communication unit referred to above may be implemented by a processor and a transceiver, respectively.

FIG. 7 is a schematic block diagram of a communication device 700 according to some embodiments of this application.

As shown in FIG. 7, the communication device 700 may include a processor 710.

The processor 710 may call and run a computer program from a memory to implement the methods according to the embodiments of this application.

Continuing to refer to FIG. 7, the communication device 700 may further include a memory 720.

Herein, the memory 720 may be configured to store instruction information, and may also be configured to store codes, instructions, and the like executed by the processor 710. The processor 710 may call and run the computer program from the memory 720 to implement the methods according to the embodiments of this application. The memory 720 may be a separate device independent of the processor 710, or may be integrated in the processor 710.

Continuing to refer to FIG. 7, the communication device 700 may also include a transceiver 730.

The processor 710 may control the transceiver 730 to communicate with other devices, specifically, may send information or data to other devices, or receive information or data sent by other devices. The transceiver 730 may include a transmitter and a receiver. The transceiver 730 may further include antennas, and the number of the antennas may be one or more.

It should be understood that each component in the communication device 700 is connected through a bus system, where the bus system includes a power bus, a control bus and a status signal bus in addition to a data bus.

It should also be understood that the communication device 700 may be a terminal device according to some embodiments of this application, and the communication device 700 may implement the corresponding processes implemented by the terminal device in each method according to the embodiments of this application. The communication device 700 may correspond to the terminal device 600 according to the embodiments of this application, and may correspond to the corresponding executor for performing the method 300, 400 or 500 according to the embodiments of this application, which is not repeated here for brevity.

In addition, some embodiments of this application further provide a chip.

For example, the chip may be an integrated circuit chip, which has a signal processing capability, and can implement or execute the methods, steps, and logic block diagrams disclosed in the embodiments of this application. The chip may also be referred to as a system-level chip, a system chip, a chip system, a system-on-a-chip, or the like. Optionally, the chip can be applied to various communication devices, so that the communication device installed with the chip can execute the methods, steps and logic block diagrams disclosed in the embodiments of this application.

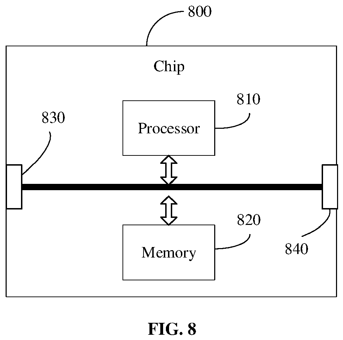

FIG. 8 is a schematic block diagram of a chip 800 according to some embodiments of this application.

As shown in FIG. 8, the chip 800 includes a processor 810.

The processor 810 may call and run a computer program from a memory to implement the methods according to the embodiments of this application.

Continuing to refer to FIG. 8, the chip 800 may further include a memory 820.

The processor 810 may call and run the computer program from the memory 820 to implement the methods according to the embodiments of this application. The memory 820 may be configured to store instruction information, and may also be configured to store codes, instructions and the like executed by the processor 810. The memory 820 may be a separate device independent of the processor 810, or may be integrated in the processor 810.

Continuing to refer to FIG. 8, the chip 800 may further include an input interface 830.

The processor 810 may control the input interface 830 to communicate with other devices or chips, and specifically, may acquire information or data sent by other devices or chips.

Continuing to refer to FIG. 8, the chip 800 may further include an output interface 840.

The processor 810 may control the output interface 840 to communicate with other devices or chips, and specifically, may output information or data to other devices or chips.

It should be understood that the chip 800 may be applied to the terminal device according to the embodiments of this application, and the chip can implement the corresponding processes implemented by the terminal device in each method according to the embodiments of this application, which is not repeated here for brevity.

It should also be understood that various components in the chip 800 are connected through a bus system, where the bus system includes a power bus, a control bus and a status signal bus in addition to a data bus.

The processors referred to above may include, but are not limited to:
general-purpose processor, digital signal processor (DSP), application specific integrated circuit (ASIC), field programmable gate array (FPGA) or other programmable logic devices, discrete gates, transistor logic devices, discrete hardware components, and so on.

The processor may be configured to implement or execute the methods, steps, and logical block diagrams disclosed in the embodiments of this application. The steps of the method disclosed in conjunction with the embodiments of this application may be directly embodied as execution of a hardware decoding processor, or as execution of a combination of hardware and software modules in the decoding processor. The software module may be located in random access memory, flash memory, read-only memory, programmable read-only memory or erasable programmable memory, registers and other storage medium known in the art. The storage medium is located in the memory, and the processor reads the information from the memory, and completes the steps of the above method in combination with its hardware.

The memory mentioned above includes but is not limited to:
volatile memory and/or non-volatile memory; where the non-volatile memory may be a read-only memory (ROM), a programmable ROM (PROM), an erasable PROM (EPROM), an electrically EPROM (EPROM), or flash memory; the volatile memory may be random access memory (RAM), which acts as an external cache. By way of illustration without limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synch link DRAM (SLDRAM) and direct rambus RAM (DR RAM).

It should be noted that the memory described herein is intended to include these and any other suitable types of memory.

Embodiments of this application also provide a computer-readable storage medium for storing a computer program. The computer-readable storage medium stores one or more programs including instructions that, when executed by a portable electronic device including a plurality of application programs, enable the portable electronic device to perform the method as described in the embodiments of method 300, 400 or 500.

Optionally, the computer-readable storage medium can be applied to the network device in the embodiments of this application, and the computer program enables the computer to execute the corresponding processes implemented by the network device in the various methods of the embodiments of this application, which are not repeated here for brevity.

Optionally, the computer-readable storage medium can be applied to the mobile terminal/terminal device in the embodiments of this application, and the computer program enables the computer to execute the corresponding processes implemented by the mobile terminal/terminal device in each method of the embodiments of this application, which are not repeated here for brevity.

The embodiments of this application also provide a computer program product, including a computer program.

Optionally, the computer program product can be applied to the network device in the embodiments of this application, and the computer program enables the computer to execute the corresponding processes implemented by the network device in each method of the embodiments of this application, which are not repeated here for brevity.

Optionally, the computer program product can be applied to the mobile terminal/terminal device in the embodiments of this application, and the computer program enables the computer to execute the corresponding processes implemented by the mobile terminal/terminal device in each method of the embodiments of this application, which are not repeated here for brevity.

A computer program is also provided in the embodiments of this application. When the computer program is executed by a computer, it enables the computer to perform the method of the embodiments shown in method 300, 400 or 500.

Optionally, the computer program can be applied to the network device in the embodiments of this application. When the computer program is run on the computer, it causes the computer to execute the corresponding processes implemented by the network device in each method of the embodiments of this application, which are not repeated here for brevity.

In addition, some embodiments of this application further provide a communication system, and the communication system may include the above-mentioned terminal devices to form a communication system as shown in FIG. 1, which is not repeated here for brevity. It should be noted that the terms "system" and the like in this document may also be referred to as "network management architecture" or "network system" and the like.

It should also be understood that the terms used in the embodiments of this application and the appended claims are only for the purpose of describing specific embodiments, and are not intended to limit the embodiments of this application.

For example, as used in the embodiments of this application and the appended claims, the singular forms "alan," "the," "forgoing/aforementioned," and "said" are intended to include the plural forms as well, unless the context clearly dictates otherwise.

Those skilled in the art can realize that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Experts may use different methods for each specific application to implement the described functions, but such implementation should not be considered beyond the scope of the embodiments of this application.

If implemented in the form of a software functional unit and sold or used as a stand-alone product, it may be stored in a computer-readable storage medium. Based on this understanding, the technical solutions of the embodiments of this application can be embodied in the form of software products in essence, as least for those parts that make contributions to the prior art or the parts of the technical solutions. The computer software products are stored in a storage medium, including several instructions for causing a computer device (which may be a personal computer, a server, or a network device, etc.) to execute all or part of the steps of the methods described in the embodiments of this application. The aforementioned storage medium includes a U disk, a removable hard disk, a read-only memory, a random access memory, a magnetic disk or an optical disk and other medium that can store program codes.

Those skilled in the art can clearly understand that, for the convenience and brevity of description, the specific working process of the above-described systems, devices and units may refer to the corresponding processes in the foregoing method embodiments, which will not be repeated here.

In some embodiments provided in this application, it should be understood that the disclosed systems, devices and methods may be implemented in other manners.

For example, the division of units, modules or components in the apparatus embodiments described above is only a logical function division, and other division manners may be used in actual implementation. For example, multiple units, modules or components may be combined or integrated to another system, or some units or modules or components can be ignored or not implemented.

For another example, the above-mentioned units/modules/components described as separate/illustrated components may be or may not be physically separated, that is, may be located in one place, or may be distributed to multiple network units. Some or all of the units/modules/components may be selected according to actual needs to achieve the purpose of the embodiments of this application.

Finally, it should be noted that the mutual coupling or direct coupling or communication connection shown or discussed above may be achieved through some interfaces, indirect coupling or communication connection of devices or units, which may be electrical, mechanical or other forms.

The above contents are only specific implementations of the embodiments of this application, but the protection scope of the embodiments of this application is not limited thereto. Changes or substitutions should all be covered within the protection scope of the embodiments of this application. Therefore, the protection scope of the embodiments of this application should be subject to the protection scope of the claims.

## Claims

1. A wireless communication method, **characterized in** comprising:
receiving a first message based on a first discontinuous reception (DRX) configuration corresponding to the first message.

2. The method as claimed in claim 1, wherein the first message comprises at least one of following messages: a system message, a paging message, and a device discovery message.

3. The method as claimed in claim 1 or 2, wherein the first DRX configuration is a dedicated configuration of the first message.

4. The method as claimed in claim 1 or 2, wherein the first message corresponds to a first identifier, and the first identifier corresponds to the first DRX configuration.

5. The method as claimed in claim 4, wherein the first identifier comprises at least one of following identifiers: a terminal identifier, a terminal group identifier, a message type identifier, a transmission identifier, and an application identifier.

6. The method as claimed in claim 4, wherein the first identifier is a layer-2 address.

7. The method as claimed in any one of claims 1 to 6, further comprising:
determining a time resource corresponding to the first DRX configuration based on at least one synchronization source.

8. The method as claimed in claim 7, wherein the at least one synchronization source comprises a synchronization source of a terminal device.

9. The method as claimed in claim 7, wherein the at least one synchronization source comprises a synchronization source corresponding to at least one receivable synchronization signal.

10. The method as claimed in any one of claims 1 to 9, further comprising:
receiving indication information, wherein the indication information is used for indicating that the first message is not included or is included in to-be-transmitted data.

11. The method as claimed in claim 10, further comprising:
receiving the first message if the indication information indicates that the first message is included in the to-be-transmitted data.

12. The method as claimed in claim 10 or 11, wherein the indication information is carried in at least one field in sideline control information (SCI), and/or the indication information indicates, through a format of the SCI, that the first message is not included or is included in the to-be-transmitted data.

13. The method as claimed in claim 10 or 11, wherein the indication information is carried in at least one field in a media access control (MAC) header, and/or the indication information indicates, through a format of the MAC header, that the first message is not included or is included in the to-be-transmitted data.

14. The method as claimed in any one of claims 1 to 13, wherein the method is applied in device-to-device (D2D) communication.

15. A wireless communication method, **characterized in** comprising:
sending a first message based on a first discontinuous reception (DRX) configuration corresponding to the first message.

16. The method as claimed in claim 15, wherein the first message comprises at least one of following messages: a system message, a paging message, and a device discovery message.

17. The method as claimed in claim 15 or 16, wherein the first DRX configuration is a dedicated configuration of the first message.

18. The method as claimed in claim 15 or 16, wherein the first message corresponds to a first identifier, and the first identifier corresponds to the first DRX configuration.

19. The method as claimed in claim 18, wherein the first identifier comprises at least one of following identifiers: a terminal identifier, a terminal group identifier, a message type identifier, a transmission identifier, and an application identifier.

20. The method as claimed in claim 18, wherein the first identifier is a layer-2 address.

21. The method as claimed in any one of claims 15 to 20, further comprising:
determining a time resource corresponding to the first DRX configuration based on at least one synchronization source.

22. The method as claimed in claim 21, wherein the at least one synchronization source comprises a synchronization source of a terminal device.

23. The method as claimed in claim 21, wherein the at least one synchronization source comprises a synchronization source corresponding to at least one receivable synchronization signal.

24. The method as claimed in any one of claims 15 to 23, further comprising:
sending indication information, wherein the indication information is used for indicating that the first message is not included or is included in to-be-transmitted data.

25. The method as claimed in claim 24, further comprising:
sending the first message if the indication information indicates that the first message is included in the to-be-transmitted data.

26. The method as claimed in claim 24 or 25, wherein the indication information is carried in at least one field in sideline control information (SCI), and/or the indication information indicates, through a format of the SCI, that the first message is not included or is included in the to-be-transmitted data.

27. The method as claimed in claim 24 or 25, wherein the indication information is carried in at least one field in a media access control (MAC) header, and/or the indication information indicates, through a format of the MAC header, that the first message is not included or is included in the to-be-transmitted data.

28. The method as claimed in any one of claims 15 to 27, wherein the method is applied in device-to-device (D2D) communication.

29. A wireless communication method, **characterized in** comprising:
receiving or sending indication information, wherein the indication information is used for indicating that a first message is not included or is included in to-be-transmitted data.

30. The method as claimed in claim 29, further comprising:
receiving or sending the first message if the indication information indicates that the first message is included in the to-be-transmitted data.

31. The method as claimed in claim 29 or 30, wherein the indication information is carried in at least one field in sideline control information (SCI), and/or the indication information indicates, through a format of the SCI, that the first message is not included or is included in the to-be-transmitted data.

32. The method as claimed in claim 29 or 30, wherein the indication information is carried in at least one field in a media access control (MAC) header, and/or the indication information indicates, through a format of the MAC header, that the first message is not included or is included in the to-be-transmitted data.

33. The method as claimed in any one of claims 29 to 32, wherein the first message comprises at least one of following messages: a system message, a paging message, and a device discovery message.

34. The method as claimed in any one of claims 29 to 32, wherein the method is applied in device-to-device (D2D) communication.

35. A terminal device, **characterized in** comprising:
a processor, a memory and a transceiver, wherein the memory is configured to store a computer program, and the processor is configured to invoke and run the computer program stored in the memory to perform the method as claimed in any one of claims 1 to 14.

36. A terminal device, **characterized in** comprising:
a processor, a memory and a transceiver, wherein the memory is configured to store a computer program, and the processor is configured to invoke and run the computer program stored in the memory to perform the method as claimed in any one of claims 15 to 28.

37. A terminal device, **characterized in** comprising:
a processor, a memory and a transceiver, wherein the memory is configured to store a computer program, and the processor is configured to invoke and run the computer program stored in the memory to perform the method as claimed in any one of claims 29 to 34.

38. A chip, **characterized in** comprising:
a processor, configured to invoke and run a computer program from a memory, causing a device installed with the chip to perform the method as claimed in any one of claims 1 to 14, the method as claimed in any one of claims 15 to 28, or the method as claimed in any one of claims 29 to 34.

39. A computer-readable storage medium, **characterized by** being used for storing a computer program, wherein the computer program causes a computer to perform the method as claimed in any one of claims 1 to 14, the method as claimed in any one of claims 15 to 28, or the method as claimed in any one of claims 29 to 34.

40. A computer program product, comprising computer program instructions that cause a computer to perform the method as claimed in any one of claims 1 to 14, the method as claimed in any one of claims 15 to 28, or the method as claimed in any one of claims 29 to 34.

41. A computer program, **characterized in** causing a computer to perform the method as claimed in any one of claims 1 to 14, the method as claimed in any one of claims 15 to 28, or the method as claimed in any one of claims 29 to 34.
